(19) **Europäisches Patentamt / European Patent Office / Office européen des brevets**

(11) **EP 4 610 241 A1**

(12) # EUROPEAN PATENT APPLICATION

(43) Date of publication:
**03.09.2025 Bulletin 2025/36**

(21) Application number: **24382224.4**

(22) Date of filing: **01.03.2024**

(51) International Patent Classification (IPC):
***C04B 28/02*** *(2006.01)*

(52) Cooperative Patent Classification (CPC):
(C-Sets available)
**C04B 28/02;** C04B 2111/00068; C04B 2111/60

(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Aquambiente Circular Economy Solutions, S.L.**
**08028 Barcelona (ES)**

(72) Inventor: **ELIAS CASTELLS, Francisco Javier**
**08022 BARCELONA (ES)**

(74) Representative: **Sugrañes, S.L.P.**
**Calle Provenza 304**
**08008 Barcelona (ES)**

(54) **USE OF AN AGGREGATE-BASED WET INDUSTRIAL SLUDGE FOR THE MANUFACTURE OF A PAVEMENT SLAB AND SLAB OBTAINED**

(57) The present invention relates to a use of a wet industrial sludge when additivated with deflocculant for the manufacture of a slab obtainable by moulding with cement as a binder, comprising the composition of the sludge, on a dry basis and by weight, at least 65%, preferably at least 80% and more preferably at least 85% silicate rocks, with an average size less than 0.1 mm; and at least 6.5%, preferably at least 9% resin. The concrete slab obtained comprises at least one layer that, by weight, comprises 20% to 40% of wet industrial sludge, aggregate, cement and at least one water-repellent additive.

Particle size distribution

Fig. 1

EP 4 610 241 A1

(52) Cooperative Patent Classification (CPC): (Cont.)

C-Sets
**C04B 28/02, C04B 18/0418, C04B 22/16,
C04B 20/0076, C04B 24/08, C04B 18/167;
C04B 28/02, C04B 18/0418, C04B 2103/0081,
C04B 20/0076, C04B 2103/65, C04B 18/167**

**Description**

**Technical field of the invention**

The invention refers to the use of an aggregate-based wet industrial sludge, which is a waste product of an industrial process, for the manufacture of a pavement slab. The invention also relates to a slab that incorporates a high mass percentage of recycled material, including that which originates from the aforementioned wet industrial sludge.

**Background of the invention**

Methods are known for manufacturing artificial stone slabs that can be applied to decoration from a mixture of crushed silica, glass, granite, ferrosilicon quartz, marble or other similar materials, with different particle sizes, and polyester resin, along with other functional additives.

A typical example is commercial products that essentially consist of inorganic mineral fillers, mainly silicate aggregates (more than 90%), polyester (5-15%), pigments and additives (<5%), among others.

For the production of these products in panel or plate format, the components are mixed, obtaining a homogeneous mass that is subjected to a pressing operation through which uniformity and consistency is achieved. The plates are baked, dried and finally subjected to a treatment that eliminates surface imperfections and water polishing that generates characteristic residues that, pretreated, are discarded.

Moreover, a recurring material for the production of slabs suitable for paving a floor is hydraulic cement. A hydraulic cement is a powdery material that, when mixed with water forms a paste that hardens slowly. The addition of granules of predetermined grain size to the mixture forms a kind of mortar or concrete, depending on the size of the granules, also used for the production of slabs, especially for making concrete slabs by pouring it into a mould.

As in other areas, it is interesting to incorporate into the slabs components that come from renewable and/or recycled raw materials that are more environmentally friendly. In this sense, incorporating construction waste as granules into mortar or concrete is widely known. Construction waste can originate from bricks, concrete blocks, tiles, plate glass, etc., from demolitions.

However, the incorporation of this type of construction waste affects the mechanical (and aesthetic) properties of the slabs obtained in such a way that limits their incorporation if compliance with the requirements and/or regulations applicable in this regard is sought.

A desirable property for slabs intended for outdoor use is low water absorption, with the purpose of not favouring the deterioration of the material due to freezing effects or lower consistency; this same property also being desirable for slabs intended to be used indoors to prevent the appearance of mould and bacterial proliferation, making this product unsuitable in environments where a high degree of hygiene is required.

**Description of the invention**

According to a first aspect of the invention, the use of characteristic waste is proposed, which until now was discarded, which waste is generated in the elimination step of eliminating surface imperfections and water polishing of the artificial stone plates manufactured by compaction based on silicate rocks and resins.

Revealingly, this waste that is in the form of a wet industrial sludge, sometimes also referred to as slurry, is usable, specifically, it can be used for the manufacture of prefabricated slabs, of the type that can be obtained by moulding with cement as an agglomerate.

That is why, in a first aspect, the present invention relates to the use of a wet industrial sludge when it is additivated with a deflocculant for the manufacture of a slab obtainable by moulding with cement as an agglomerate, comprising the composition of the sludge, on a dry basis and by weight,

- silicate rocks, by at least 65%, preferably at least 80% and more preferably at least 85%, with an average size less than 0.1 mm; and
- resin, by at least 6.5%, preferably at least 9%.

Within the context of this specification, the term "comprises" is taken to mean "includes, among other things". It is not intended to be interpreted as "consisting solely of".

A wet industrial sludge that meets the particular composition indicated above is sludge, which is currently discarded, resulting from subjecting the waste directly generated in the step of eliminating surface imperfections and water polishing the artificial stone plates manufactured by compaction based on silicate rocks and resins to conventional operations of decanting, flocculation and dehydration.

Although the silicate rocks used to manufacture this type of artificial stone plates have a size that does not reach 1.5/2 mm, in the waste generated during the water polishing process, the particle size decreases to below 0.1mm (mostly), which on average represents an appearance of almost nanometric particles that would have dissuaded the expert from incorporating a wet industrial sludge obtained from this waste, in significant quantities, to a slab obtainable by moulding with cement as a binder since such incorporation alters the rheology and behaviour of the slab.

In fact, on one hand, on average, granulometric distribution tests reflect that the particle size in the wet industrial sludge generated during the water polishing process of the artificial stone plates manufactured by compaction based on silicate rocks and resins is between 0.1 microns and 100 microns.

Moreover, in the particular case of also incorporating construction waste into the mass of the slab, as is known in the art, the such small particle size that this particular wet industrial sludge carries alters the granulometric distribution of the recycled aggregates, that is, of the aggregates from construction waste. This circumstance especially occurs when, as explained later, the presence in the mass of both construction waste and waste from wet industrial sludge is significant, the presence of an ingredient being considered significant when it is found in more than 30% by weight of the mass.

Additionally, as has been put forward before, the waste directly generated in the water polishing to which the artificial stone plates manufactured by compaction based on silicate rocks and resins are subjected are conventionally subjected to operations of decanting, flocculation and dehydration resulting in wet industrial sludge, which was discarded until now. The purpose of additivation of the wet industrial sludge with a deflocculant is to give this wet industrial sludge a texture that allows its correct mixing with the other ingredients of the mass of the slab, especially with the larger aggregates provided, for example, by construction waste.

In a variant of the invention, a solution of deflocculant in water is prepared for the additivation. The proportion preferably varies from 0.2 to 2% of deflocculant in water, depending on the texture of the wet industrial sludge received. The deflocculant solution in water is mixed with the wet industrial sludge received prior to or simultaneously with the incorporation of, and mixing with, the other components of the slab.

In a variant of the invention, the deflocculant used is sodium tripolyphosphate.

In another variant of the invention, the deflocculant used is a superplasticiser for concrete, such as, only by way of an example, the commercial superplasticiser SikaPlast.

Another aspect of the present invention is a concrete slab, obtained from the setting of a wet mass, comprising the slab, by weight, between 20 and 40% of the additivated wet industrial sludge according to the invention.

In a variant, the slab further comprises, by weight, between 30 and 60% aggregate, which may be or comprise recycled aggregate; at least 20% cement; and at least one water-repellent additive.

In a variant, the slab comprises between 30 and 40% by weight of the additivated wet industrial sludge according to the invention; preferably, 35 to 40%; more preferably 38 to 40%.

In a variant, the slab comprises between 35 and 50% by weight of aggregates; preferably, 35 to 45%; more preferably 35 to 40%.

In a variant, the aforementioned aggregates are recycled aggregates.

Recycled aggregates should be understood as CDW (Construction and Demolition Waste). They are usually made up of: 60% concrete/mortar and the rest ceramic.

In another variant, the aforementioned aggregates from natural quarries, which give the final slab a priori higher mechanical characteristics, but which in turn minimise the circular material involved in manufacturing.

In other variants, the aforementioned aggregates are a mixture of recycled aggregates and aggregates from quarries.

In any case, the particle size of the aggregates used may vary; larger aggregates can be incorporated when the size of the slab to be manufactured is larger.

A wet mass to obtain a conventional concrete slab usually uses a water-cement ratio (w/c) around 0.5 and 0.6. A ratio of this calibre is not satisfactory for obtaining a concrete slab according to the invention since the obtained slab acquires a mechanical bending strength that is too low.

Contrary to the usual values, to obtain the concrete slab according to the invention, a water-cement (w/c) ratio greater than 0.6 is used. Preferably, a w/c ratio greater than 0.75 is selected; more preferably greater than 0.8; and even more preferably greater than 0.85, the value $1.1 \pm 0.1$ being a candidate.

In any case, the amount of water used may require other parameters that are involved in the slab manufacturing process to be altered, such as the pressing pressure of the mass in the mould where said mass is poured.

By using more water than in stoichiometric principle, only taking into account the cement, less pressure is required for correct compaction and distribution of the granulated material in the mixture, detrimentally affecting the energy necessary to give rigidity to the final product, and validating the belief of the importance of abundant use of water in the mixture.

This is why, in one embodiment of the invention, the pressure used in the preparation of test specimens and/or commercial slabs is 70 bars.

It is suspected that part of the water intended for hydration of the cement is absorbed by the large specific surface area of the microaggregates of the industrial sludge and that for this reason the cement does not become completely hydrated when conventional w/c ratios are used. The analysis of tested specimens of the material used to obtain the concrete slabs according to the invention by means of electron microscopy techniques confirms this suspicion.

In an unexpected way, the mechanical bending strength of concrete slabs according to the invention has exceeded the target value of 5 MPa without this favouring the increase in porosity.

In a variant of interest, the water-repellent additive is a long-chain fatty acid or a mixture of at least two long-chain fatty acids in a proportion between 0.5% to 10% by weight with respect to the total weight of the cement, preferably in a proportion between 0.5% to 5%.

In a variant, the water-repellent additive is oleic acid and the oleic acid:cement ratio is $0.04 \pm 0.005$.

## Brief description of the drawings

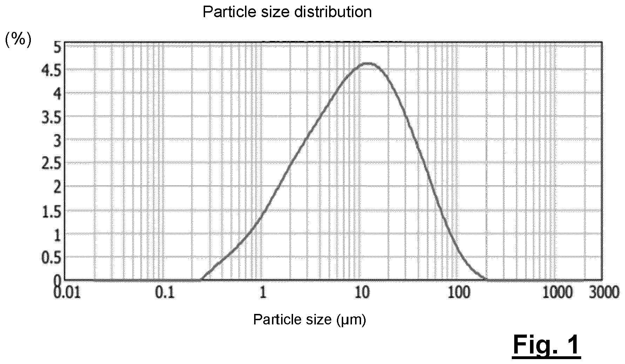

Fig. 1 shows the particle distribution according to size in a wet industrial sludge used in examples of implementation of the invention.

## Detailed description of the invention

Two embodiments of a slab that exemplify the invention are described below. In both cases, the wet industrial sludge used comes from the waste generated during the surface finishing and water polishing operations of plates made of artificial stone of a commercial product.

The average composition of this wet industrial sludge concrete, on a dry basis, is: 90% silicate rocks, 9.5% resin and 0.5% paper. This wet industrial sludge has, on average, 30% water, so the composition of the industrial sludge is 69% silicate rocks, 7.9% resin, 0.4% paper and 25% water and the solids/particle size distribution is as illustrated in Figure 1.

Likewise, the cement used as a binder is Portland cement.

*Example 1. Single-layer specimen*

A single-layer specimen is defined as a slab composed of a homogeneous mixture of material throughout its mass.

*Raw materials*

- Dry: Portland Cement, recycled concrete aggregates up to 4 mm.
- Wet: wet industrial sludge, tap water, Sodium Tripolyphosphate (deflocculant), oleic acid (water repellent).

*Preparation of the mixture*

1. Preparation of the deflocculant solution, corresponding to 2 g of Sodium Tripolyphosphate per 98 g of tap water (2% solution by weight). All the water to be subsequently added will be from this dissolution.

2. Preparation of the corresponding granulometry for the aggregates, separated by sizes for correct granulometric distribution, having used 7 sieves for their separation. In this specific case, the menu used was:

| Size range (mm) | % |
|---|---|
| 2.8 < x < 4.0 | 32.49 |
| 1.6 < x < 2.8 | 33.99 |
| 0.9 < x < 1.6 | 17.25 |
| 0.45 < x < 0.9 | 9.75 |
| 0.2 < x < 0.45 | 4.25 |
| 0.1 < x < 0.2 | 1.39 |
| 0,063 < x < 0.1 | 0.88 |
| 0 < x < 0,063 | 0 |

3. Calculation of quantities to be used: The initial calculated percentage (without water or additives) is 40% wet industrial sludge + 20% cement + 40% aggregates. For a desired w/c ratio of 1.1 (also counting the moisture of the sludge, about 30% $\pm$ 3%) and a 4% oleic acid/cement ratio, the total percentages would be 35.9% wet industrial sludge + 17.95% cement + 35.9% aggregate + 9.53% solution + 0.72% oleic acid.

4. Weighing the dry components (cement and aggregates).

5. Weighing the deflocculant solution (with the amount to reach the w/c ratio of the desired mixture); weighing the additive and adding to the solution; and mixing, that is, adding the amount of wet industrial sludge to the solution and mixing again until a homogeneous texture is achieved.

6. Pouring all the materials (dry and wet) into a container and kneading (with a specialised mortar malaxator) for approximately 10 minutes.

*Pressing*

1. Weighing the quantity to be pressed.

2. Pouring the mass into the pressing mould, properly lubricated and remaining as flat and homogeneous as possible.

3. Vibrating for about 1 minute, to help compact and remove entrapped air (preferably, with a lid that helps prevent particle segregation by size, and exerts a little pressure).

4. Transferring the mould to the press.

5. Performing compression, at about 50 bar (optimal range between 35 and 70 bar).

6. Maintaining the pressure for a certain period of time, 30 seconds is sufficient.

7. Demoulding and curing (preferably, in a high humidity environment at about 50°C).

*Example 2. Dual-layer specimen*

This dual-layer specimen is defined as a slab formed by two layers mixed independently, placed one on top of the other and pressed at the same time. It contains a surface layer with a high amount of water and ⅓ of the total thickness, and a base layer with a lower amount of water and $\frac{2}{3}$ of the total thickness.

*Raw materials*

- Surface layer (⅓):

  - Dry: Portland Cement, mixture of granite aggregates up to 4 mm and quartz aggregates up to 2 mm.
  - Wet: wet industrial sludge, tap water, organic superplasticiser of the SikaPlast brand model 1003 NG, oleic acid (water repellent).

- Base layer ( $\frac{2}{3}$ ):

  - Dry: Portland Cement, granite aggregates up to 4 mm.
  - Wet: The same wet industrial sludge, tap water, organic superplasticiser of the SikaPlast brand model 1003 NG, oleic acid (water repellent).

*Preparation of the mixtures*

1. Preparing the corresponding granulometries for the aggregates.

2. Calculation of quantities to be used:

   a. Surface layer: The initial calculated percentage (without water or additives) is 50% wet industrial sludge + 25% cement + 25% aggregate mixture, the latter being 40% quartz and 60% granite. Final percentages, for w/c ratio of 1.5 and 4% of oleic acid to cement: 39.68% wet industrial sludge + 19.84% cement + 19.84% aggregate mixture + 19.45% tap water + 0.4% superplasticiser + 0.79% oleic acid.

b. Base layer: The initial calculated percentage (without water or additives) is 30% wet industrial sludge + 20% cement + 50% aggregates. Final percentages, for w/c ratio of 0.7 and 4% of oleic acid to cement: 28.45% wet industrial sludge + 18.98% cement + 47.42% aggregate + 3.98% tap water + 0.38% superplasticiser + 0.79% oleic acid.

3. Weighing and mixing all the components (same as Example 1, but with 2 mixtures separately).

*Pressing*

1. Weighing the mixture amounts of the surface and base layers.
2. Pouring the mass into the pressing mould for pressing the surface layer (bottom layer in the mould) while subjecting it to vibration, approximately 1 minute and flattened and homogenised. Adding the base layer on this surface layer; this base layer is drier and it is more necessary to cover the mould to vibrate it and prevent it from segregating by size.
3. Transferring the mould to the press.
4. Performing compression, at about 70 bar.
5. Maintaining the pressure for a certain period of time, 30 seconds is sufficient.
6. Demoulding and curing (preferably, in a high humidity environment at about 50°C).

*Results*

Results are given below that are extracted from the $6 \times 6 \times 2$ cm$^3$ specimens obtained in both examples, resting at room temperature for 7 days, showing that values higher than those indicated are obtained for pieces whose category was the object of the concrete slab obtained, according to the standard UNE-EN-1339.

| CONCRETE SLABS UNE-ENE-1339 | | | | | |
|---|---|---|---|---|---|
| | **Class** | **Marking** | **Description** | **Requirements** | **Examples of implementation** |
| Bending strength | 3 | U | Apply force with a 3-point bending machine on a bi-supported specimen with flat sides in the middle, and determine the characteristic strength of the material using Navier's law of stress | average > 5 MPa; minimum > 4 MPa | average > 6 MPa; minimum > 5.5 MPa |
| Water absorption | 2 | B | Determination, by weight difference (saturated versus dry), of the percentage of water that the piece is capable of absorbing due to the open porosity present. | <6 % | <6 |
| Abrasion | 3 | H | Using specialised equipment containing a vertical rotating disk, a sample of approximately 8x12 cm is contacted vertically and is subjected to abrasion with corundum, that decreases in a controlled manner. The width of the imprint made is noted. | <= 23 mm | 22.8 |
| Freeze-thaw | 3 | D | A plate with a square surface with sides measuring approximately between 9 and 15 cm is subjected to cold-heat cycles that reach -18°C with antifreeze salts. The test result is the material loss rate per surface area. | average < 1 kg/m2; no value > 1.5 kg/m2 | average < 0.8 kg/m2; no value > 1.2 kg/m2 |

(continued)

| CONCRETE SLABS UNE-ENE-1339 | | | | | |
|---|---|---|---|---|---|
| | **Class** | **Marking** | **Description** | **Requirements** | **Examples of implementation** |
| Glide | 3 | RD | With a pendulum containing an indicator at the bottom, it is dropped to a certain height and depending on the distance the pendulum reaches, glide resistance is calculated. | <45 | <45 |

**Claims**

1. A use of a wet industrial sludge when it is additivated with deflocculant for the manufacture of a slab obtainable by moulding with cement as a binder, comprising the composition of the sludge, on a dry basis and by weight, at least 65%, preferably at least 80% and more preferably at least 85% silicate rocks, with an average size less than 0.1 mm; and at least 6.5%, preferably at least 9% resin.

2. The use according to claim 2, **characterised in that** the deflocculant comprises a sodium tripolyphosphate solution.

3. A concrete slab obtained from the setting of a wet mass, the slab being **characterised in that** it comprises at least one layer that, by weight, comprises between 20% and 40% of the additivated wet industrial sludge according to any one of claims 1 or 2.

4. The slab according to claim 3, **characterised in that** it comprises, by weight, between 30% and 60% aggregate; at least 20% cement; and at least one water-repellent additive.

5. The slab according to claim 4, **characterised in that** it comprises, by weight, between 30% and 40% by weight of the additivated wet industrial sludge; preferably, between 35% and 40%; more preferably between 38% and 40%.

6. The slab according to any one of claims 3 to 5, **characterised in that** it comprises, by weight, between 35% and 50% aggregates; preferably, between 35% and 45%; more preferably between 35% and 40%.

7. The slab according to any one of claims 3 to 6, **characterised in that** the aggregates comprise CDW recycled aggregates.

8. The slab according to claim 7, **characterised in that** the aggregates consist of CDW recycled aggregates.

9. The slab according to any one of claims 3 to 8, **characterised in that** the water-repellent additive comprises oleic acid.

10. The slab according to claim 9, **characterised in that** the water-repellent additive consists of oleic acid.

11. The slab according to claims 9 or 10, **characterised in that** the oleic acid:cement ratio is $0.04 \pm 0.005$.

12. A method for manufacturing a slab according to any one of claims 3 to 11, wherein the additive consists of a sodium tripolyphosphate solution that is added to the wet industrial sludge in an amount such that the water:cement ratio, also including the moisture from the wet industrial sludge, is greater than 0.85.

13. The method according to claim 12, **characterised in that** the water:cement ratio, also including the moisture from the wet industrial sludge, is $1.1 \pm 0.1$.

Particle size distribution

**Fig. 1**

Europäisches
Patentamt

European
Patent Office

Office européen
des brevets

**EUROPEAN SEARCH REPORT**

Application Number

EP 24 38 2224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 111 072 354 A (SHENZHEN NENGER ENVIRONMENTAL PROTECTION TECH DEVELOPMENT CO LTD) 28 April 2020 (2020-04-28) | 1-11 | INV. C04B28/02 |
| A | * claims * | 12,13 | |
| Y | EP 0 010 777 A1 (AALBORG PORTLAND CEMENT [DK]) 14 May 1980 (1980-05-14) | 1-11 | |
| A | * claims * * examples * | 12,13 | |
| Y | US 5 234 754 A (BACHE HANS H [DK]) 10 August 1993 (1993-08-10) | 1-11 | |
| A | * claims * * examples * | 12,13 | |
| Y | CN 106 396 627 A (CAO SHULIANG) 15 February 2017 (2017-02-15) | 1-11 | |
| A | * claims * | 12,13 | |
| A | US 2014/216533 A1 (ALFANI ROBERTA [IT] ET AL) 7 August 2014 (2014-08-07) * claims * * paragraph [0031] - paragraph [0032] * | 1-13 | |

TECHNICAL FIELDS
SEARCHED (IPC)

C04B

The present search report has been drawn up for all claims

| Place of search | Date of completion of the search | Examiner |
|---|---|---|
| Munich | 26 June 2024 | Zimpfer, Emmanuel |

EPO FORM 1503 03.82 (P04C01)

## ANNEX TO THE EUROPEAN SEARCH REPORT
## ON EUROPEAN PATENT APPLICATION NO.

EP 24 38 2224

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2024

| Patent document cited in search report | | Publication date | Patent family member(s) | | Publication date |
|---|---|---|---|---|---|
| CN 111072354 | A | 28-04-2020 | NONE | | |
| EP 0010777 | A1 | 14-05-1980 | AU | 538813 B2 | 30-08-1984 |
| | | | CA | 1190947 A | 23-07-1985 |
| | | | EP | 0010777 A1 | 14-05-1980 |
| | | | ES | 8102999 A1 | 16-02-1981 |
| | | | FI | 793451 A | 04-05-1980 |
| | | | IE | 52191 B1 | 05-08-1987 |
| | | | IS | 2522 A7 | 04-05-1980 |
| | | | JP | S6059182 B2 | 24-12-1985 |
| | | | JP | S55500863 A | 30-10-1980 |
| | | | NO | 163449 B | 19-02-1990 |
| | | | SU | 1582982 A3 | 30-07-1990 |
| | | | WO | 8000959 A1 | 15-05-1980 |
| US 5234754 | A | 10-08-1993 | NONE | | |
| CN 106396627 | A | 15-02-2017 | NONE | | |
| US 2014216533 | A1 | 07-08-2014 | CA | 2847731 A1 | 21-03-2013 |
| | | | CN | 103958435 A | 30-07-2014 |
| | | | EP | 2755930 A1 | 23-07-2014 |
| | | | TW | 201321330 A | 01-06-2013 |
| | | | US | 2014216533 A1 | 07-08-2014 |
| | | | WO | 2013037792 A1 | 21-03-2013 |

EPO FORM P0459

For more details about this annex : see Official Journal of the European Patent Office, No. 12/82